# EUROPEAN PATENT APPLICATION

(11) **EP 4 596 404 A1**
(43) Date of publication of application: **06.08.2025**
(21) Application number: 24154937.7
(22) Date of filing: 31.01.2024
(51) Int. Cl.: B64D 11/00, B64D 13/06, B64D 11/04, B64D 13/08

(54) **AIRCRAFT GALLEY COMPARTMENT, AIRCRAFT GALLEY SYSTEM AND AIRCRAFT**

(71) Applicant: Airbus Operations GmbH, 21129 Hamburg (DE)
(72) Inventor: Reiss, Matthias, Hamburg (DE); Mortensen Ernits, Rafael, Hamburg (DE); Kempa, Michael, Hamburg (DE)

(57) **Abstract**

Aircraft galley compartment (3), comprising: at least one port (13, 15) accessible from the inside of the compartment (3) and configured to connect to a compartment temperature adjusting unit (17). Aircraft galley system (1), comprising: an aircraft galley (25); the aircraft galley compartment (3); a compartment temperature adjusting unit (17) for cooling the inside of the compartment (3) and being connected to the at least one port (13, 15) of the compartment (3); and a waste heat conduct (9) configured to distribute the waste heat from the compartment temperature adjusting unit (17) to at least one specific location of the aircraft galley (25) that is different from the compartment (3). Aircraft (27) comprising the aircraft galley compartment (3) or comprising the aircraft galley system (1).

## Description

### Technical Field

The invention relates to an aircraft galley compartment, an aircraft galley system comprising the compartment, and an aircraft comprising the aircraft galley compartment or comprising the aircraft galley system.

### Background

A common aircraft galley comprises an aircraft galley structure including system interfaces, e.g. electric, cooling, water, wastewater, air ventilation. Further, storage space is provided by means of trolleys and aircraft galley compartments integrated in the galley. Electrical galley insert units are installed permanently in respective aircraft galley compartments, each having a dedicated purpose, e.g. cooling meals, or heating meals. Such electrical galley insert units may be refrigerators, freezers, or ovens, which are all fully functional stand-alone units, i.e. units that are fully operational regardless of whether they are installed inside the respective aircraft galley compartment or removed from the respective aircraft galley compartment. Each of these specific units has specific cooling/heating requirements, e.g. selectable temperatures, achievable temperature ranges, etc., insulation grade requirements, e.g. refrigerator grade insulation, freezer grade insulation, or oven grade insulation, and space requirements.

These specific units are heavy, costly, and - once installed in the respective aircraft galley compartment - part of the galley, whether needed or not.

### Summary

The problem to be solved is to improve the known aircraft galley compartment, aircraft galley system comprising the compartment, and aircraft comprising the aircraft galley compartment or comprising the aircraft galley system - in particular in terms of its efficient and cost-effective usefulness.

The problem is solved by the subject matter of the independent claim(s).

The problem underlaying the invention is particularly solved by the following technical teachings:
(1) Aircraft galley compartment, comprising: at least one port accessible from the inside of the compartment and configured to connect to at least one compartment temperature adjusting unit. Thereby, a compartment can be equipped in an easy and cost-efficient manner with compartment temperature adjusting units for cooling or heating. This allows every such compartment to be either used for storage of goods, e.g. meals, at ambient temperature or for altering the temperature of the compartment according to the current needs, which may be cooling the goods or heating the good. Every such compartment can be turned into a refrigerator, freezer, or oven, if required. The at least one port may be configured for energizing and controlling the at least one compartment temperature adjusting unit. The compartment can be adjustable in size, allowing a flexible catering and optimizing the energy consumption inside an aircraft galley and an aircraft.
(2) Aircraft galley compartments according to section (1), wherein the at least one port provide a connection to at least one of an electric circuit, a communication system and/or a temperature adjusting loop, in which a heat exchanger fluid is circulated. The electric circuit enables the operation of a compartment temperature adjusting unit, such as a thermoelectrical device, for example a peltier element, or a fan as part of a compartment temperature adjusting unit. The power and polarity of the compartment temperature adjusting unit can be controlled by the electric circuit. The communication system allows data, such as current operational status, temperature, etc., from a compartment temperature adjusting unit to be transferred to a control unit, for example, which is configured to control the temperature within the compartment and/or multiple such compartments. The control unit may be integrated in a human machine interface unit, which is described below. The temperature adjusting loop may provide an already cooled or heated fluid, which a compartment temperature adjusting unit may further cool or heat to increase the desired cooling or heating effect.
(3) Aircraft galley compartment according to one of the preceding sections, further comprising: a closed state, in which the compartment is not accessible from the outside; and an open state, in which the compartment is accessible from the outside; wherein, in the closed state, the compartment provides at least one of a refrigerator grade insulation, a freezer grade insulation, and/or an oven grade insulation. The insulation can avoid unnecessary energy loss and improve safety, for example when the compartment is used as an oven.
(4) Aircraft galley compartment according to one of the preceding sections, wherein the compartment is configured to be temporarily divided into sub-compartments by a removable dividing wall. Such a solution may reduce energy consumption, when cooling or heating goods in a compartment, since the size of the compartment to be cooled or heated can be adjusted according to the amount and volume of goods to be cooled or heated.
(5) Aircraft galley compartment according to one of the preceding sections, further comprising: at least one compartment temperature adjusting unit for cooling the inside of the compartment; and at least one compartment temperature adjusting unit for heating the inside of the compartment. Compartments with such a configuration can be used for both, cooling and heating. This allows meals to be cooled, as in a refrigerator or a freezer, and heated, as in an oven, in the same compartment, without requiring that those meals must be moved from one compartment to another compartment.
(6) Aircraft galley compartment according to section (4) and (5), wherein the at least one compartment temperature adjusting unit for cooling is provided to cool a first sub-compartment, and wherein the at least one compartment temperature adjusting unit for heating is provided to heat a second sub-compartment. This configuration allows a multifunctional compartment that can be cooled and heated to be divided into more energy efficient but dedicated sub-compartments that can only be cooled or heated.
(7) Aircraft galley compartment according to one of the preceding sections, further comprising: at least one compartment temperature adjusting unit that is one of a skin heat exchanger, a heat pipe assembly or a thermoelectrical device, such as a peltier element, or a combination thereof. Depending on the circumstances, one may be chosen over the other. For example, a skin heat exchanger may be provided with a thermoelectrical device and a fan to form an efficient heat exchanger.
(8) Aircraft galley compartment according to one of the preceding sections, further comprising: at least one temperature sensor configured to measure the temperature in the compartment. Information from the sensor may be used for controlling the temperature of the compartment, e.g. by controlling the operation of the compartment temperature adjusting unit(s) provided in the compartment.
   Alternatively or additionally, the aircraft galley compartment may comprise an adaptable exhaustion according to operation and adaptable control of temperature / air flow according to operation, e.g. door opening, different meals etc.
(9) Aircraft galley compartment according to one of the preceding sections, further comprising: at least one humidity sensor configured to measure the humidity in the compartment. Information from the sensor may be used for controlling the humidity of the compartment, e.g. by controlling the operation of the heat exchanger(s) provided in the compartment.
(10) Aircraft galley system, comprising: an aircraft galley; the aircraft galley compartment according to one of the preceding claims; and a human machine interface unit connected to the at least one port and configured to communicate with a compartment temperature adjusting unit connected to the at least one port. For this purpose, the human machine interface unit may comprise a control unit. The human machine interface unit / control unit may be configured to control the connected compartment temperature adjusting unit, e.g. based on output from at least one of the aforementioned sensors. Thereby, meal storage and meal preparation can be controlled, for example. The criteria for such control may be at least one of a minimal peak power consumption, time of removal of meals / drinks from the compartment, as well as quality related criteria, such as a required temperature, airflow and/or humidity. The connected between the human machine interface unit / control unit and the at least one port / ports of at least one of the aircraft galley compartment / compartments may be remote.
   Additionally or alternatively, the aircraft galley compartment may comprise a sensor for sensing an open and/or closed state of the compartment. Of course, this sensor may output a signal to the human machine interface unit / control unit, which may use this input for the above-mentioned purposes.
   The human machine interface unit / control unit, which may be a thermal management unit, can be modular and/or installed inside an electrical panel of the aircraft galley system. Additionally or alternatively, the human machine interface unit / control unit can be configured as a centralized thermal management unit for multiple compartments for optimal energy efficiency.
(11) Aircraft galley system, comprising: an aircraft galley; the aircraft galley compartment according to one of the preceding sections; a compartment temperature adjusting unit for cooling the inside of the compartment and being connected to the at least one port of the compartment; and a waste heat conduct configured to distribute the waste heat from the compartment temperature adjusting unit to at least one specific location of the aircraft galley that is different from the compartment. This is an energy efficient configuration that allows the reduction of necessary heat generation at the at least one specific location by making use of the waste heat.
(12) Aircraft galley system according to section (10), wherein the specific location of the aircraft galley is at least one of another aircraft galley compartment to be heated, another compartment temperature adjusting unit for heating an aircraft galley compartment, and/or a galley floor. This reduces the required energy for operation of an airplane galley.
(13) Aircraft galley system according to section (10) or section (11), further comprising: a human machine interface unit configured to control distribution of the waste heat from the compartment temperature adjusting unit to the at least one specific location of the aircraft galley. This is an efficient and intuitive way of directing the waste heat to a desired location.
(14) Aircraft comprising the aircraft galley compartment according to one of sections (1) to (9) or comprising the aircraft galley system according to one of sections (10) to
(12). Since weight is important in an aircraft, an aircraft with such an aircraft galley system can be made lighter and, therefore, more efficient.

### Brief Description of the Drawings

The foregoing summary, as well as the following detailed description, will be better understood when read in conjunction with the appended drawings. For the purposes of illustrating the present disclosure, preferred embodiments are shown in the drawings. It should be understood, however, that the invention is not limited to the specific embodiments disclosed, and reference is made to the claims for that purpose. In the drawings:
- Fig. 1: shows an aircraft galley system for adjusting the temperature in galley compartments;
- Fig. 2: shows a modification of one of the compartments shown in Fig. 1;
- Fig. 3: shows cross-section A-A indicated in Fig. 1; and
- Fig. 4: shows an aircraft galley of the aircraft galley system in an aircraft.

### Detailed Description

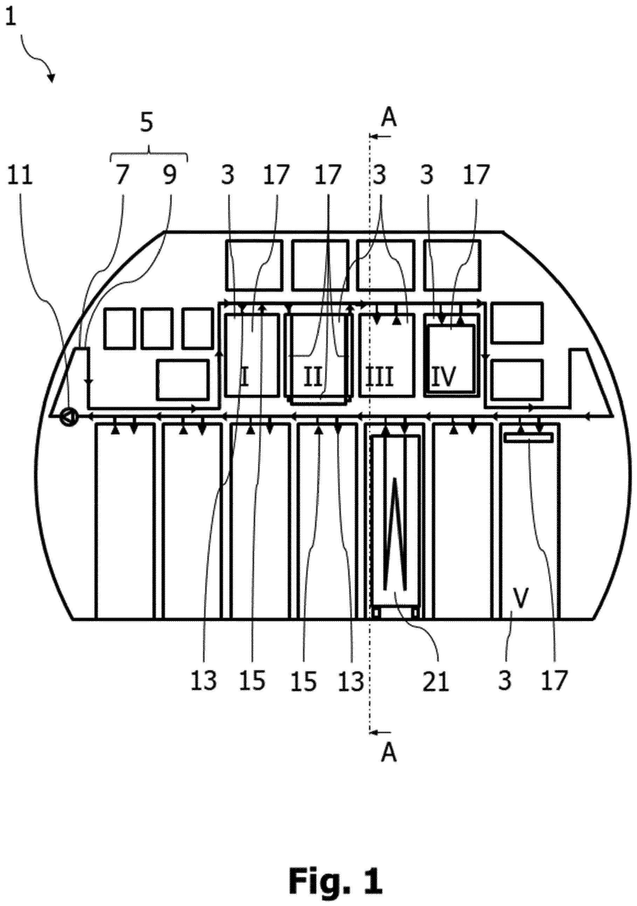

Fig. 1 shows an aircraft galley system 1 for adjusting the temperature in galley compartments 3.

In this embodiment, the aircraft galley system 1 comprises a temperature adjusting loop 5, in which a heat exchanger fluid is circulated. The temperature adjusting loop 5 comprises a fluid line, which may comprise a single line or two lines, e.g. a cool line 7 and a hot line 9, which in Fig. 1 extend in parallel in a plane orthogonal to the one shown in Fig. 1 and, therefore, are covered by each other. The hot line 9 may also be referred to as a waste heat conduct 9. The fluid is circulated within the temperature adjusting loop 5 by means of a pump 11 in a clockwise direction in Fig. 1. The temperature adjusting loop 5 may be integrated in the galley, e.g. in the galley panels and/or in the galley workdeck and may further include a reservoir (not shown) for the fluid.

Output ports 13 and input ports 15 may be provided inside a galley compartment 3 and configured to connect to at least one compartment temperature adjusting unit 17. The ports 13, 15 may provide a connection to at least one of an electric circuit (not shown), a communication system (not shown) and/or the temperature adjusting loop 5. The ports 13, 15 may be arranged in and/or around galley compartments 3. An aircraft cabin trolley may form such a galley compartment 3. Instead of the shown two ports 13, 15, only one port or more than two ports may be provided. So, at least one port 13, 15 has to be provided. Said at least one port may be configured for simultaneous energizing (power transfer) and controlling (data transfer) the at least one compartment temperature adjusting unit.

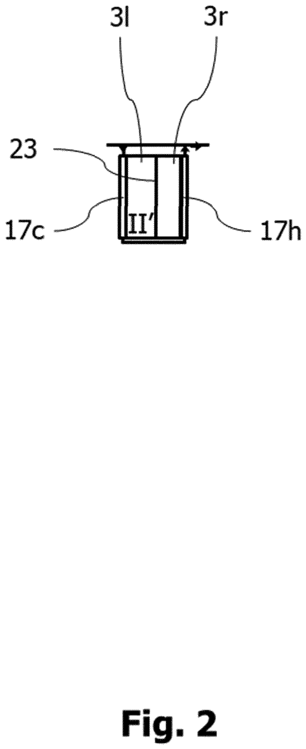

At least one compartment temperature adjusting unit 17 for adjusting the temperature in a galley compartment 3 may be provided for the respective galley compartment 3. A compartment temperature adjusting unit 17 may be directly connected to the electric circuit, the communication system and/or the temperature adjusting loop 5 (see I and II in Fig. 1) or indirectly connected to the electric circuit, the communication system and/or the temperature adjusting loop 5 (see IV and V in Fig. 1), e.g. via the ports 13, 15. Further, a compartment temperature adjusting unit 17 may be integrated in at least one of a back (see I in Fig. 1), side (see II in Fig. 1), bottom (see II in Fig. 1), top wall (not shown), or door (not shown) of a compartment 3. A specific form of integration may be that the respective compartment temperature adjusting unit 17 forms the entire respective wall or inner door surface of a compartment 3. This would allow an even more efficient temperature adjustment. Further, one compartment temperature adjusting unit 17 arranged between two adjacent compartments 3 may be configured to serve both compartments 3, i.e. heat or cool both compartments 3. Alternatively or additionally, a compartment temperature adjusting unit 17 may be located inside a compartment 3 and removably connected to electric circuit, the communication system and/or the temperature adjusting loop 5 (see IV and V in Fig. 1), e.g. via the ports 13, 15. In this case, the compartment temperature adjusting unit 17 may extend along at least one of a back (see IV in Fig. 1), side, bottom, top wall (see V in Fig. 1), or door of the compartment 3. The ports 13, 15 are accessible from the inside of the compartment 3 in that they extend into the compartment 3 (see IV and V in Fig. 1). However, the ports 13, 15 may be flush with one of the walls or the door of the compartment 3, or they may even be recessed within one of the aforementioned walls or the door of the compartment 3. The flush and the recessed configuration increase the space available within the compartment 3. The recessed configuration may further make connecting a compartment temperature adjusting unit 17 to the ports 13, 15 easier, since the recesses for the ports 13, 15 may help find the ports 13, 15 in the compartment 3. The walls and door of the compartment may provide at least one of a refrigerator grade insulation, freezer grade insulation, and/or oven grade insulation, e.g. for temperatures above 100 °C. This modularity allows compartment temperature adjusting units 17 to be exchanged during flights or on ground depending on the desired configuration. A compartment 3 with multiple compartment temperature adjusting units 17 may be configured to comprise at least one compartment temperature adjusting unit 17 for cooling and at least one compartment temperature adjusting unit 17 for heating (see II in Fig. 1 and Fig. 2). Thereby, compartments 3 may be provided that are only capable of cooling or heating, and compartments 3 may be provided that are capable of cooling and heating. The selection of the optimum compartment temperature adjusting unit 17 for cooling, for example, depends on:
- duration of cooling needs (short range or long range flight);
- freezing or cooling (chilling) only; and
- cooling (chilling) temperature accuracy.

In the end the selection of the optimum cooling unit is a trade of of complexity and cooling needs. This can be customized easily, even between different flights as the compartment temperature adjusting unit 17 is interchangeably attachable to the compartment 3.

In Fig. 1:
- I is a compartment 3, in which a compartment temperature adjusting unit 17 is integrated in the back wall of the compartment 3;
- II is a compartment 3, in which compartment temperature adjusting units 17 are integrated in the side walls and in the bottom wall of the compartment 3; one or both of the compartment temperature adjusting units 17 may be configured to also cool or heat the adjacent compartment 3 denoted by I and III;
- III is a compartment 3 without any compartment temperature adjusting unit 17 but with the ports 13, 15 for connecting a compartment temperature adjusting unit 17; of course, the compartment 3 may have multiple such ports 13, 15 on different walls and/or the door for connecting multiple compartment temperature adjusting units 17;
- IV is a compartment 3 like III with the difference that a compartment temperature adjusting unit 17 is arranged inside the compartment 3 and connected to the ports 13, 15, wherein the compartment temperature adjusting unit 17 extends along the back wall of the compartment 3; and
- V is a compartment 3 like IV with the difference that the compartment is larger and configured to receive an aircraft cabin trolley and that the compartment temperature adjusting unit 17 extends along the top wall of the compartment 3.

The compartment temperature adjusting unit 17 may be a skin heat exchanger or a flat heat pipe assembly. The skin heat exchanger can either directly heat or cool the compartment 3, e.g. by means of a fan (not shown), or indirectly heat or cool the compartment by means of a thermoelectrical device, e.g. a peltier element, attached to it, which can also comprise a fan (not shown). The peltier element / skin heat exchanger is preferably integrated in the compartment 3, preferably at the back of the compartment 3 to optimize space and simplify system integration. Thereby, starting from the temperature of the fluid entering the thermoelectrical device, the thermoelectrical device can even further increase or decrease the temperature of the fluid to better meet the temperature requirements of the respective compartment 3. Further, at least one temperature sensor and/or humidity sensor (not shown), which may be wireless, may be provided in the respective compartment 3.

So, the compartments 3 can be configured for cooling with:
- passive cooling units, e.g. dry-ice battery/-ies, and optionally with a distribution unit, e.g. fan(s) and/or pipes; and/or
- active cooling units, e.g. thermoelectrical device(s), and optionally with a distribution unit, e.g. fan(s) and/or pipes.

The compartments 3 can be configured for heating with:
- active heating units, e.g. thermoelectrical device(s), and optionally with a distribution unit, e.g. fan(s) and/or pipes.

In case of active cooling via peltier elements, the pettier elements can be attached to a flat skin heat exchanger or a flat heat pipe assembly in order to dispose the waste heat, thus the flat skin heat exchanger or flat heat pipe assembly acts as the heat sink in the cooled compartment 3. The heat transfer in the heat exchanger can be accomplished with a heat transfer / 2 phase heat transfer fluid, which is distributed within the temperature adjusting loop 5. An assembly comprising a peltier element, a fan, and a skin heat exchanger or a flat heat pipe can be provided. Preferably, the peltier element and the fan are both attached to one side of the skin heat exchanger or flat heat pipe. Alternatively, the assembly is either interchangeable with a heating module or can be used for heating by alternating the current and heat flow.

In other words, in case no freezing is required, a compartment cooling compartment temperature adjusting unit 17 can be directly integrated in the side walls of the compartment. This can be combined with a compartment heating compartment temperature adjusting unit 17 at the back wall of the compartment 3 to realize a combined functionality of cooling and heating.

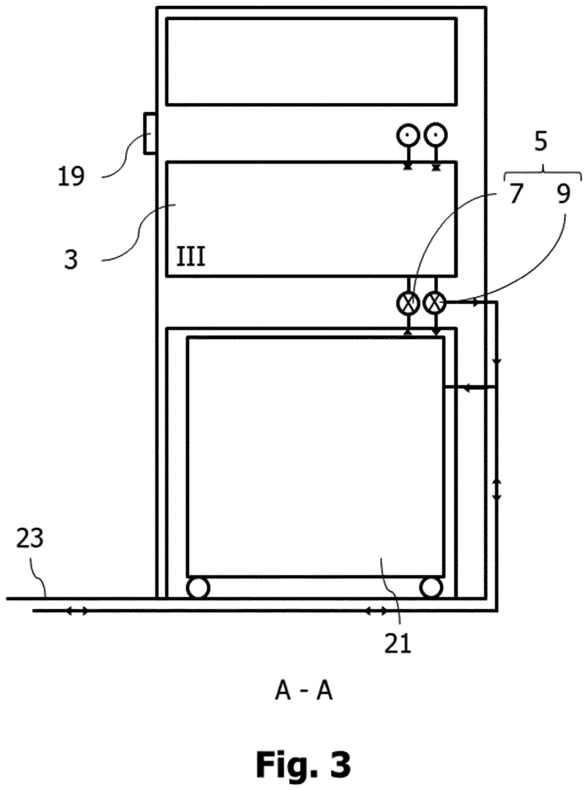

Another characteristic of this solution is that less electronic components are necessary than for the conventional design with electrical galley insert units. Only one display may be necessary to control the temperature in the compartments 3. Also the AC/DC conversion can be done centrally. This leads to less costs, less electronic components, less weight, and an easier control of the temperature in the compartments 3. A human machine interface unit 19 (see Fig. 3), e.g. a touch screen device, may be provided as part of the aircraft galley system 1. A control unit (not shown), which may be part of the human machine interface unit 19, may be configured to determine, e.g. calculate with an algorithm, the optimum way to prepare the food, e.g. cooling or heating, according to customizable criteria, e.g. the most eco efficient way by reducing the power, avoiding power peaks etc. This will minimize the power consumption and optimize crew effort, since it is current standard to operate every electrical galley insert unit, such as ovens, individually. The human machine interface unit 19 may be configured to perform any combination of the following functions:
a) visualizing compartments 3;
b) identifying and visualizing cooling compartments 3 and heating compartments 3;
c) visualizing the location and/or type of compartment temperature adjusting units 17 provided in the compartments 3;
d) setting and/or controlling the temperature in the compartments 3;
e) controlling the operation of the compartment temperature adjusting unit 17;
f) controlling distribution of waste heat from the cooling compartment temperature adjusting units 17; and
g) selecting, when meals in compartments 3 shall be ready for service, and preparing the meals accordingly by operating the compartment temperature adjusting units 17 automatically.

The temperature of the fluid in the temperature adjusting loop 5 is controlled by a temperature adjusting unit 21. Here, the temperature adjusting unit 21 is configured as a heat sink, i.e. to cool the fluid circulating in the temperature adjusting loop 5. The ports 13, 15 may be configured to allow a quick connection and disconnection of the temperature adjusting unit 21 to the temperature adjusting loop 5, even within flights. For that a quick coupling may be used. The temperature adjusting unit 21 includes a heat exchanging unit, which is shown in a W-shape, to cool down the fluid in the temperature adjusting loop 5. However, the ports 13, 15 may additionally or alternatively be configured to allow a quick connection and disconnection of compartment temperature adjusting units 17 in general to an electric circuit (not shown) and/or a communication system (not shown).

Here, the temperature adjusting unit 21 is a well-insulated pre-cooled compartment, that can be filled with dry ice, for example, prior to or at the beginning of a flight. As shown in Fig. 1, the temperature adjusting unit 21 may be fixedly connected to the galley. For example, it may be in a non-accessible area of the galley, wherein dry ice can be inserted into the dry ice compartment via a chute from outside of the galley. Alternatively, the dry ice compartment may be part of a trolley, which allows a quick change of one trolley that is no longer sufficiently pre-cooled, e.g. whose dry ice volume has decreased below a threshold, with another trolley that is sufficiently pre-cooled., e.g. whose dry ice volume is at or above a threshold. This solution covers the ground phase as well as the flight phase of on an aircraft. Alternatively, the temperature adjusting unit may be a trolley with an active cooling function (not shown), e.g. with a vapor cycle, which is used as a ground support equipment and is only installed on ground to cover the pull down on ground. This solution covers the ground phase of on an aircraft. Alternatively, the temperature adjusting unit may be a heat exchanger unit located adjacent to an aircraft fuselage (both not shown) to act as a heat sink in flight. This solution covers the flight phase of on an aircraft and can be combined with the previous solution to cover both, the ground phase as well as the flight phase of an aircraft.

Fig. 2 shows a modification of the compartment 3 denoted with II in Fig. 1, which here is referred to as compartment II'. Here, the compartment II' is divided by a dividing wall 23, e.g. as in this case an insulated dividing wall 23, into a left sub-compartment 3l and a right sub-compartment 3r. Thereby, the temperature of both compartments 3l, 3r can be set individually. In fact, the modification further differs from Fig. 1 in that a compartment temperature adjusting unit 17c is integrated in the side wall of the compartment II' forming the left sub-compartment 3l and a compartment temperature adjusting unit 17h is integrated in the side wall of the compartment II' forming the right sub-compartment 3r. However, each compartment temperature adjusting unit 17c, 17h may be located inside the compartment 3. The first compartment temperature adjusting unit 17c is configured to cool the left sub-compartment 3l, while the second compartment temperature adjusting unit 17h is configured to heat the right sub-compartment 3l. For that purpose, the first compartment temperature adjusting unit 17c may be supplied with the fluid from the temperature adjusting loop 5 and output the fluid to the second compartment temperature adjusting unit 17h. Thereby, waste heat from the cooling first compartment temperature adjusting unit 17c can be used in the heating second compartment temperature adjusting unit 17h.

Fig. 3 shows cross-section A-A indicated in Fig. 1. Here, a galley floor 23 is heated by waste heat from the aircraft galley system 1 or a cooling compartment temperature adjusting unit (not shown) in one of the compartments 3. Here specifically, fluid from the hot line 9 is used for heating the galley floor 23 and subsequently returned cooler to the temperature adjusting unit 21 to be cooled down even further and reintroduced into the aircraft galley system 1 for cooling compartments 3.

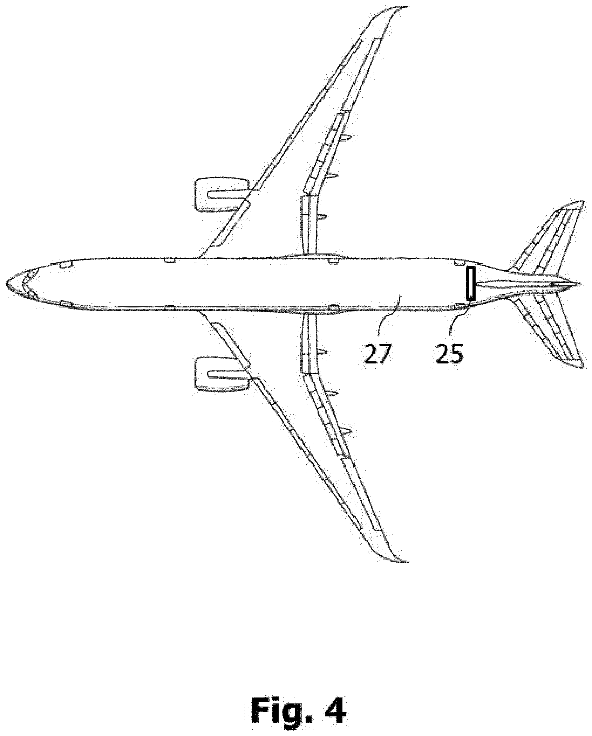

Fig. 4 shows an aircraft galley 25 of the aircraft galley system 1 in an aircraft 27.

The embodiments offer at least one of the following advantages:
- decreased weight;
- optimized design, e.g. less electronics for controlling, power efficiency, etc.;
- decreased number of parts;
- decreased costs;
- higher reliability;
- increased space efficiency; and
- higher flexibility for customization.

## Claims

1. Aircraft galley compartment (3), comprising:
at least one port (13, 15) accessible from the inside of the compartment (3) and configured to connect to at least one compartment temperature adjusting unit (17).

2. Aircraft galley compartment (3) according to claim 1,
wherein the at least one port (13, 15) provide a connection to at least one of an electric circuit, a communication system and/or a temperature adjusting loop (5), in which a heat exchanger fluid is circulated.

3. Aircraft galley compartment (3) according to one of the preceding claims, further comprising:
a closed state, in which the compartment (3) is not accessible from the outside; and
an open state, in which the compartment (3) is accessible from the outside;
wherein, in the closed state, the compartment (3) provides at least one of a refrigerator grade insulation, a freezer grade insulation, and/or an oven grade insulation.

4. Aircraft galley compartment (3) according to one of the preceding claims,
wherein the compartment (3) is configured to be temporarily divided into sub-compartments (31, 3r) by a removable dividing wall (23).

5. Aircraft galley compartment (3) according to one of the preceding claims, further comprising:
at least one compartment temperature adjusting unit (17) for cooling the inside of the compartment (3); and
at least one compartment temperature adjusting unit (17) for heating the inside of the compartment (3).

6. Aircraft galley compartment (3) according to claims 4 and 5,
wherein the at least one compartment temperature adjusting unit (17) for cooling is provided to cool a first sub-compartment (31), and
wherein the at least one compartment temperature adjusting unit (17) for heating is provided to heat a second sub-compartment (3r).

7. Aircraft galley compartment (3) according to one of the preceding claims, further comprising:
at least one compartment temperature adjusting unit (17) that is one of a skin heat exchanger, a heat pipe assembly or a thermoelectrical device, such as a peltier element, or a combination thereof.

8. Aircraft galley compartment (3) according to one of the preceding claims, further comprising:
at least one temperature sensor configured to measure the temperature in the compartment (3).

9. Aircraft galley compartment (3) according to one of the preceding claims, further comprising:
at least one humidity sensor configured to measure the humidity in the compartment (3).

10. Aircraft galley system (1), comprising:
an aircraft galley (25);
the aircraft galley compartment (3) according to one of the preceding claims; and
a human machine interface unit (19) connected to the at least one port (13, 15) and configured to communicate with a compartment temperature adjusting unit (17) connected to the at least one port (13, 15).

11. Aircraft galley system (1), comprising:
an aircraft galley (25);
the aircraft galley compartment (3) according to one of the preceding claims;
a compartment temperature adjusting unit (17) for cooling the inside of the compartment (3) and being connected to the at least one port (13, 15) of the compartment (3); and
a waste heat conduct (9) configured to distribute the waste heat from the compartment temperature adjusting unit (17) to at least one specific location of the aircraft galley (25) that is different from the compartment (3).

12. Aircraft galley system (1) according to claim 10 or 11,
wherein the specific location of the aircraft galley (25) is at least one of another aircraft galley compartment (3) to be heated, another compartment temperature adjusting unit (17) for heating an aircraft galley compartment (3), and/or a galley floor (23).

13. Aircraft galley system (1) according to one of claims 10 to 12, further comprising:
a human machine interface unit (19) configured to control distribution of the waste heat from the compartment temperature adjusting unit (17) to the at least one specific location of the aircraft galley (25).

14. Aircraft (27) comprising the aircraft galley compartment (3) according to one of claims 1 to 9 or comprising the aircraft galley system (1) according to one of claims 10 to 13.
